(19) Europäisches Patentamt
European Patent Office
Office européen des brevets

(11) Veröffentlichungsnummer: **0 349 625 B1**

(12) **EUROPÄISCHE PATENTSCHRIFT**

(45) Veröffentlichungstag der Patentschrift: **15.09.93**

(51) Int. Cl.5: **G01N 15/08**

(21) Anmeldenummer: **89900605.0**

(22) Anmeldetag: **22.12.88**

(86) Internationale Anmeldenummer:
**PCT/EP88/01192**

(87) Internationale Veröffentlichungsnummer:
**WO 89/06353 (13.07.89 89/15)**

(54) **OBERFLÄCHENMESSGERÄT.**

(30) Priorität: **30.12.87 DE 8717114 U**
**23.02.88 DE 8802341 U**

(43) Veröffentlichungstag der Anmeldung:
**10.01.90 Patentblatt 90/02**

(45) Bekanntmachung des Hinweises auf die
Patenterteilung:
**15.09.93 Patentblatt 93/37**

(84) Benannte Vertragsstaaten:
**CH DE FR GB IT LI NL**

(56) Entgegenhaltungen:
**AT-A- 379 686**
**CH-A- 347 027**
**CH-A- 511 429**
**CH-A- 574 599**

(73) Patentinhaber: **HEUBACH ENGINEERING GMBH**
**Heubachstrasse**
**D-38685 Langelsheim(DE)**

(72) Erfinder: **ADRIAN, Gerhard**
**Talstra e 20a**
**D-3380 Goslar(DE)**
Erfinder: **KLEIN, Ian**
**Kornstra e 86**
**D-3380 Goslar(DE)**
Erfinder: **PETERS, Klaus**
**Lammgasse 1**
**D-3388 Bad Harzburg(DE)**

(74) Vertreter: **Müller-Boré & Partner Patentanwälte**
**Isartorplatz 6 Postfach 26 02 47**
**D-80059 München (DE)**

EP 0 349 625 B1

**Beschreibung**

Die Erfindung betrifft ein auf dem Prinzip der Luftpermeabilität beruhendes Oberflächenmeßgerät zur Bestimmung der spezifischen Oberfläche pulverförmiger Substanzen, wobei ein bestimmtes Luftvolumen durch einen Preßling, hergestellt aus dem zu untersuchenden Material, gesaugt wird.

Ein solches auf der Luftdurchlässigkeit basierendes Meßverfahren wird praktisch bereits angewandt und ist z.B. in AT-A-379 686 oder CH-A-511 429 beschrieben. Die Feinheit von pulverförmigen Stoffen ist für viele Anwendungsbereiche von entscheidender Bedeutung. Neben Teilchengrößenanalysen wird zur Charakterisierung der Feinheit solcher Stoffe auch die nach verschiedenen Verfahren zu bestimmende spezifische Oberfläche herangezogen. Die spezifische Oberfläche von pulverförmigen Substanzen stellt in einer Vielzahl technischer bzw. lacktechnischer Anwendungen eine bedeutende Größe zur Beurteilung der Reaktivität, des Adsorptionsvermögens, der Leistungsfähigkeit von Katalysatoren oder des Bindemittelbedarfs von Substanzen dar. Sie muß in den meisten Fällen schnell verfügbar sein.

Die Feinheit bzw. spezifische Oberfläche von Pigmenten oder Füllstoffen ist für die Lack- und Kunststoffindustrie eine wichtige Kenngröße, besonders auch hinsichtlich des Bindemittelbedarfs.

Beispielsweise ist auch die Aktivatorwirkung von Zinkoxid bei Vulkanisierprozessen in starkem Maße von der Feinheit und damit der spezifischen Oberfläche des verwendeten Zinkoxids abhängig, so daß die Bestimmung und Kenntnis dieses Wertes von Nutzen ist.

Der Erfindung liegt die Aufgabe zugrunde, ein Oberflächenmeßgerät zu schaffen, welches eine einfache, schnelle und gut reproduzierbare Messung der spezifischen Oberfläche von festen pulverförmigen Substanzen ermöglicht.

Ein solches Gerät soll möglichst automatisiert werden. Erreicht wird dies durch

a) eine Probenhalterung 11 für die Aufnahme einer Meßhülse, in der sich ein Preßling des zu untersuchenden Stoffes befindet, der durch Verdichtung auf ein definiertes Volumen bzw. Porenvolumen erhalten ist.

b) eine Vakuumpumpe 3, die mittels eines konstanten Meßvakuums ein bestimmtes Porenvolumen durch den stabilen Preßling saugt wobei die Meßhülse bzw. die Probenhalterung direktmit dem Vakuumkreislauf verbunden ist und die am Gerät von außen zugängliche Probenhalterung als absolut luftdichte Verbindung zwischen der den verdichteten Probekörper enthaltenden Meßhülse, insbesondere entgratete Meßhülse, und dem beidseitig über die Probenhalterung anliegenden Vakuumkreislauf ausgebildet ist und

c) eine in diesem verwirklichte Meßausbildung, die die für dieses Luftvolumen erforderliche Durchflußzeit mißt.

Mit den in diesem Gerät kombinierten und sinnvoll angeordneten Bauteilen ist es möglich, schnelle gut reproduzierbare Oberflächenbestimmungen nach dem Luftdurchlässigkeitsmeßprinzip an festen pulverförmigen Substanzen vorzunehmen, solange diese sich ohne Strukturveränderungen zu zylinderförmigen Körpern mit für diese Methode erforderlichen Porositäten verdichten lassen. Die zur Messung gelangenden Substanzen werden vorzugsweise mit geeigneten Werkzeugen in entgrateten runden Metallhülsen verdichtet, die dann als Meßhülsen dienen und direkt mit der Probe in die Probenhalterung eingesetzt werden.

Vorzugsweise sind die verschiedenen Bauteile in einem handlichen transportablen Kastengehäuse untergebracht.

Die Meßhülse ist rohrförmig und die Probenhalterung zur Aufnahme der Meßhülse entsprechend gebaut. Eine Seite der Meßhülse wird direkt mit der Vakuumpumpe und die andere Seite mit der Flüssigkeits- bzw. Luftvolumen-Meßeinrichtung, die über Lichtschranken die Zeitmessung steuert, verbunden.

Eine beispielsweise Ausführungsform der Erfindung soll nun mit bezug auf die beiliegenden Zeichnungen näher erläutert werden. Diese zeigen in

Figur 1      eine Seitenansicht und in

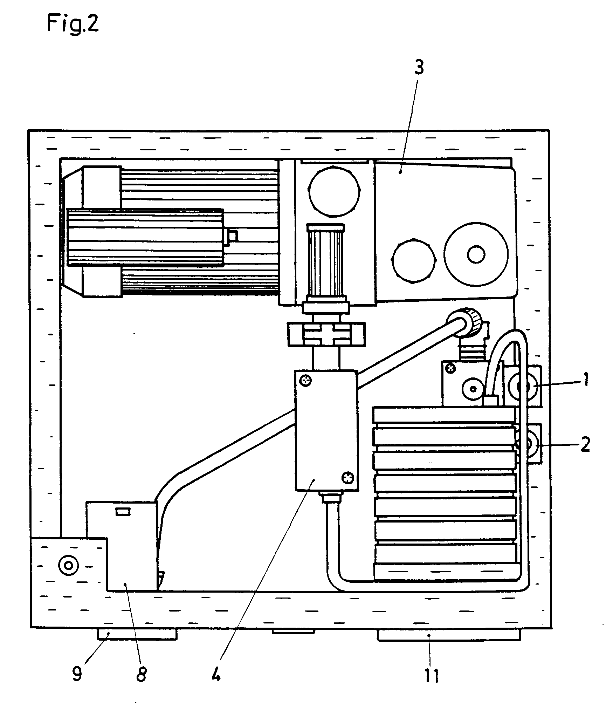

Figur 2      eine um 90° gedrehte Draufsicht auf das Gerät.
Figur 3      eine Detailansicht der Probenhalterung in Draufsicht und
Figur 4      eine Vorderansicht der Probenhalterung nach Fig. 3.

Die verdichteten Probenkörper gelangen in eine speziell konstruierte Probenhalterung 11, die eine absolut luftdichte Verbindung zwischen der Metallhülse mit dem verdichteten Probenkörper und dem beidseitig anliegenden Vakuummeßkreislauf herstellt und vorzugsweise außen am Gerät angeordnet ist. Eine Vakuumpumpe 3, die den erforderlichen Unterdruck erzeugt, ist als leistungsstarke, laufruhige Drehschieber-Vakuumpumpe ausgebildet. Zur Kontrolle und Anzeige des erforderlichen Vakuums ist eine elektrische Vakuummeß- und Anzeigevorrichtung vorgesehen, mit den Bezugszeichen 4 und 9, die mit dem Vakuumkreislauf gekoppelt ist.

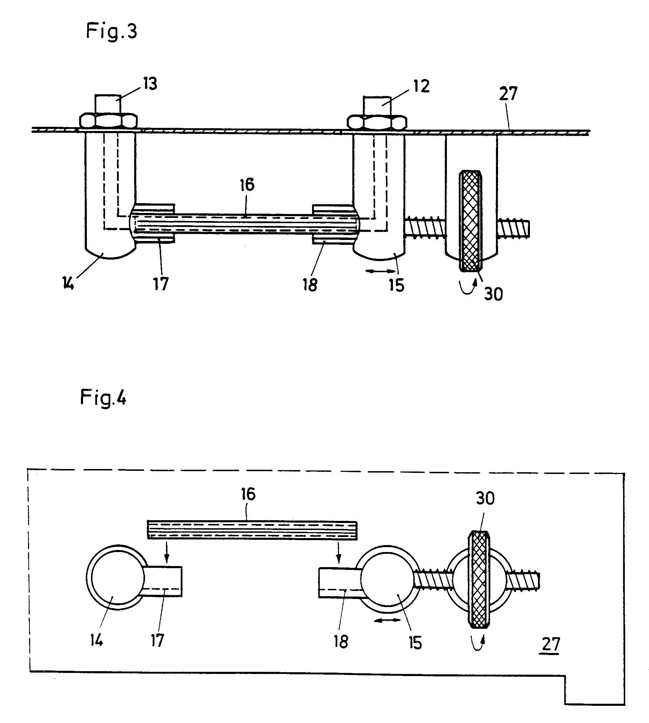

Für die Messung wird die Metallhülse (Meßhülse) mit dem verdichteten Probekörper in die speziell konstruierte, außen am Gerät angebrachte Probenhalterung eingespannt, die absolut luftdicht als Verbindung zwischen der Metallhülse mit dem verdichteten Probekörper und dem beidseitig anliegenden Meßkreislauf vorgesehen ist. Die Probenhalterung ist in Fig. 3 und 4 gezeigt und besteht aus zwei aus dem Gerät herausragenden waagerecht angebrachten Rohrstutzen, die zueinander gegenüberliegend je eine Bohrung aufweisen, an die die Meßhülse durch Drehen der Rändelschraube 30 luftdicht angeschlossen wird. Dazu ist der Rohrstutzen 15 beweglich angeordnet und kann mit der Rändelschraube 30 und einem Gewindestift gegen die Meßhülse 16 und den Rohrstutzen 14 gedrückt werden. Der Rohrstutzen 14 ist über den Anschlußstutzen 13 mit der Vakuumleitung und somit direkt mit der Vakuumpumpe verbunden, während der bewegliche Rohrstutzen 15 über den Anschlußstutzen 12 ebenfalls mit einer Vakuumleitung verbunden ist, die die Verbindung zur Zeitmesseinrichtung und den Magnetventilen darstellt. An die Stutzen 14 und 15 sind zur funktionsfähigen Lagerung der Meßhülse 16 halbrunde Rohrstücke angeschweißt, die mit den Bezugszeichen 17 und 18 in Fig. 3 und Fig. 4 bezeichnet sind, und in welche die Meßhülse einzulegen ist. Das Bezugszeichen 27 in Fig.3 und 4 bedeutet die Gehäuse-Frontplatte.

Bei der den Unterdruck erzeugenden Vakuumpumpe handelt es sich vorzugsweise um eine leistungsstarke laufruhige Drehschiebervakuumpumpe. Zur Kontrolle und Anzeige des erforderlichen Vakuums ist eine elektrische Vakuummeß- und Anzeigevorrichtung mit dem Vakuumkreislauf gekoppelt.

Durch das anliegende Vakuum wird eine definierte Luftmenge, die über eine aufsteigende Flüssigkeitssäule kontrolliert wird, durch den verdichteten Probekörper gesaugt. Das Volumen der Flüssigkeitssäule entspricht dabei dem durchgesaugten Luftvolumen. Die Flüssigkeitssäule durchläuft zwei Schaltpunkte, vorzugsweise Lichtschranken, die die Zeitmessung ein- bzw. abschalten.

Die beiden Schaltpunkte sollten unter Berücksichtigung des Rohrinnendurchmessers, der in der Praxis 5-8mm beträgt, also des Durchmessers der Flüssigkeitssäule, auf ein exaktes Volumen von z.B. 2 ml, justiert sein, wobei das Probenvolumen unter 1 ml liegt. In der Praxis beträgt das Probenvolumen ca. 0,5 ml bei einem Volumen der Flüssigkeitssäule von 2 ml, wobei die Meßhülse bei 55mm Länge einen Innendurchmesser von 6,1 mm und einen Außendurchmesser von 8,0 mm hat und aus innen entgratetem Messing oder Stahl besteht. Der Probenkörper (Preßling) hat eine Länge von 15,9 mm, einen Durchmesser von 6,1 mm, der natürlich durch den Innendurchmesser der Meßhülse vorgegeben ist, und ein Volumen von 0,46 ml.

Die Maße der Meßhülse, das Volumen der Flüssigkeitssäule bzw. das Volumen der dadurch verdrängten Luft können erforderlichenfalls variiert werden. Es hat sich jedoch gezeigt, daß praktisch alle gängigen Pulvertypen mit einer Meßhülse mit den vorgenannten Maßen, einem gleichbleibenden Prohekörpervolumen und einer Luftmengen- bzw. Flüssigkeitssäuleneinstellung gemessen werden können.

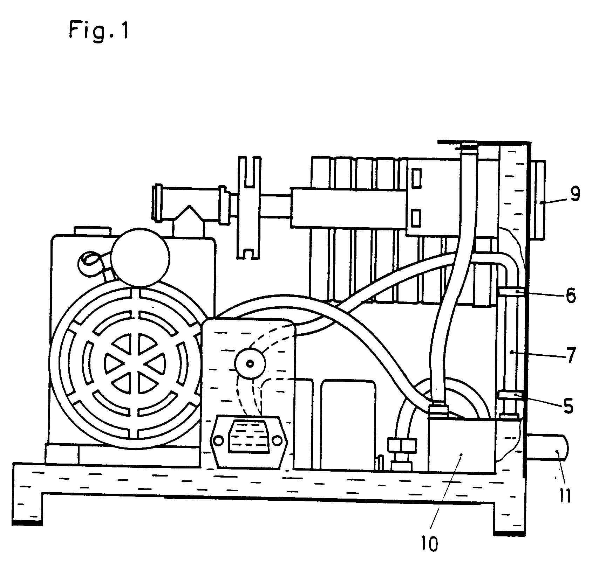

Als Meßflüssigkeit kann vorzugsweise eine niedrigviskose, neutrale Flüssigkeit mit einem relativ niedrigen Dampfdruck verwendet werden, vorzugsweise Wasser. Das Bezugszeichen 10 in Fig. 1 zeigt den Vorratsbehälter für die Meßflüssigkeit.

Die elektronische, stabilisierte Meßeinrichtung zur Zeitmessung wird durch Schaltimpulse der beiden Schaltpunkte angesteuert. Die Zeit läßt sich vorzugsweise in 1/10 sec. messen. Während der Messung bzw. nach der Messung wird diese bis zum nächsten Meßvorgang angezeigt.

Aus Sicherheitsgründen ist der Abschaltvorgang für die Vakuumpumpe mit den Stop-Impuls der Zeitmeßeinrichtung gekoppelt, so daß ein Durchsaugen der Meßflüssigkeit verhindert wird. Weiterhin wird mit Hilfe eines kapazitiven Näherungsschalters der Vorrat an Meßflüssigkeit überwacht und angezeigt.

Alle Funktionen, die für den Bediener wichtig sind, werden an der Frontseite des Meßgerätes angezeigt bzw. gesteuert. Hierzu wenden vorzugsweise Kleinspannungs-Anzeigeeinheiten bzw. Schalteinheiten verwendet.

Zum Meßvorgang wird die vorbereitete Meßhülse 16 in die Probenhalterung 11 des Geräts eingespannt und durch Drehung einer Rändelmutter 30 dicht fixiert. Um eine absolute Dichtigkeit zwischen der Meßhülse und den beiden Stutzen der Probenhalterung, also dem übrigen Meßkreislauf zu erzielen, werden vor dem Einspannen der Meßhülse die Dichtungen an beiden Spannbacken der Probenhalterung auf Sauberkeit kontrolliert. Nach Betätigung des Ein/Aus-Schalters wird durch Drücken des Pumpenschalters die eingebaute Vakuumpumpe gestartet und der Meßkreislauf evakuiert. Das Meßvakuum kann an dem eingebauten Manometer abgelesen werden und ist mit dem Aufleuchten einer Anzeige "Vakuum" erreicht. Der Meßschalter wird betätigt. Die während des Meßvorgangs aufsteigende Wassersäule startet am unteren Schaltpunkt die Zeitmessung und stoppt am oberen Schaltpunkt die Zeitmessung und gleichzeitig die Vakuumpumpe. Die Meßzeit wird an dem Anzeigeinstrument abgelesen. Bei der nächsten Messung sinkt mit dem Start der Vakuumpumpe die Wassersäule in die Ausgangslage zurück.

Um ein reproduzierbares Meßergebnis zu erhalten, soll man jeden Probenkörper viermal messen, wobei man nach zwei Meßdurchgängen die Meßhülse seitenvertauscht einsetzt und anschließend zwei weitere Messungen durchführt. Die Meßhülse kann entnommen werden, indem man die Spannbacken der Probenhalterung 11 durch Drehen der Rändelmutter 30 löst.

Nach Beendigung der Messungen wird der Meßschalter gedrückt und anschließend die Meßhülse aus der Probenhalterung entnommen. Zur abschließenden Belüftung des Meßkreislaufs wird die Vakuumpumpe kurz gestartet und das Meßgerät ausgeschaltet.

Der Strömungswiderstand beeinflußt die Durchflußzeit für ein bestimmtes Luftvolumen, die mit einigen anderen zuvor ermittelten Parametern in die Auswertung einfließt. Dabei kann der mittlere Teilchendurchmesser aus einem Nomogramm, welches auf bekannten Berechnungsgrundlagen und einem empirisch ermittelten stoffspezifischen Formfaktor basiert, unter Berücksichtigung der Dichte des jeweiligen Stoffes, der Masse des durchströmten Systems sowie der Durchlaufzeit, abgelesen werden. Die massen- oder volumenbezogene spezifische Oberfläche kann dann über eine bekannte Berechnungsformel berechnet werden.

Mittlerer Teilchendurchmesser und spezifische Oberfläche können auch unter Berücksichtigung der genannten Parameter mit Hilfe eines Pocketcomputers berechnet werden.

Die spezifische Oberfläche errechnet sich nach folgenden Formeln:

a. Für die massebezogene spez. Oberfläche $S_m$:

$$S_m = \frac{6}{g \cdot d} \qquad (m^2/g) ;$$

b. für die volumenbezogene spez. Oberfläche $S_v$:

$$S_v = \frac{6}{d} \ (m^2/cm^3);$$

$d$ = mittl. Teilchendurchmesser in $\mu m$

$g$ = Dichte in $g/cm^3$

Die nach diesem Verfahren bestimmten spezifischen Oberflächen weisen eine gute Übereinstimmung zu den durch Stickstoffadsorption bestimmten Oberflächenwerten auf.

Die gleichmässige Verteilung des Unterdrucks wird durch das Einfügen von Magnetventilen 1 und 2 zwischen der Probenhalterung 11 und der am Ende des Meßkreislaufs sich befindenden Zeitmessung 5, 6, 7 erreicht. Die vorhandenen Magnetventile 1 und 2 sorgen dafür, daß nach jedem Meßgang eine Belüftung des Kreislaufs zwischen der Meßhülse und Zeitmeßeinrichtung erfolgt, so daß zwischen den Messungen der Aufbau eines Unterdrucks vermieden wird.

Die am Ende des Meßkreislaufs angeordnete Zeitmessung ist so konstruiert, daß eine durch die Saugwirkung der durch den Probenkörper gesaugten Luft beaufschlagte Flüssigkeitssäule 7 zwei Schaltpunkte 5 und 6, vorzugsweise Lichtschranken, durchläuft, welche die Zeitmessung ein- bzw. abschalten. Das Volumen der Flüssigkeitssäule entspricht dabei dem durchgesaugten Luftvolumen.

Die beiden Schaltpunkte sind bei einem Rohrinnendurchmesser von ca. 6 mm, also dem Durchmesser der Flüssigkeitssäule 7 und einem Probenvolumen von ca. 0,5 ml auf ein Volumen von exakt 2ml justiert

Als Meßflüssigkeit wird in der Praxis Wasser verwendet.

Die Zeitmessung erfolgt vorzugsweise durch eine elektronische, stabilisierte Zeitmeßeinrichtung 8, die durch die Schaltimpulse der beiden Schaltpunkte angesteuert wird. Die Zeit wird vorzugsweise in 1/10 s. gemessen und während der Messung bzw. nach Beendigung der Messung bis zum nächsten Meßvorgang angezeigt.

**Patentansprüche**

1. Auf dem Prinzip der Luft-Permeabilität beruhendes Oberflächenmeßgerät zur Bestimmung der spezifischen Oberfläche pulverförmiger Substanzen, wobei ein bestimmtes Luftvolumen durch einen aus dem zu untersuchenden Material hergestellten Probekörper geleitet wird, mit einer Probenhalterung (11) für den Probekörper, dadurch gekennzeichnet, daß

a) die Probenhalterung (11) zur Aufnahme einer Meßhülse (16) ausgebildet ist;

b) die Meßhülse (16) zur Aufnahme eines auf ein definiertes Volumen/Porenvolumen verdichteten den Probekörper bildenden Presslings ausgebildet ist;

4

c) eine Vakuumpumpe (3) vorgesehen ist, die mittels eines konstanten Meßvakuums ein bestimmtes Luftvolumen durch den stabilen Pressling saugt;

d) die Meßhülse (16) bzw. die Probenhalterung (11) direkt mit dem Vakuumkreislauf verbunden ist; und daß

e) die am Gerät von außen zugängliche Probenhalterung (11) als absolut luftdichte Verbindung zwischen der den verdichteten Probekörper enthaltenden Meßhülse (16), insbesondere entgratete Meßhülse, und dem beidseitig über die Probenhalterung (11) anliegenden Vakuumkreislauf ausgebildet ist; und

f) daß eine Meßanordnung, die die für diesen Luftstrom erforderliche Durchflußzeit mißt, vorhanden ist.

2.  Oberflächenmeßgerät nach Anspruch 1, dadurch gekennzeichnet, daß zur Verteilung des Unterdrucks Magnetventile (1, 2) zwischen Probenhalterung (11) und einer am Ende des Meßkreislaufes befindlichen Zeitmessung (5, 7) angeordnet sind, welche durch entsprechende Steuereinrichtungen geschaltet werden.

3.  Oberflächenmeßgerät nach einem der vorhergehenden Ansprüche gekennzeichnet durch eine durch die Saugwirkung beaufschlagte Flüssigkeitssäule (7), welche zwei Schaltpunkte (5, 6), insbesondere Lichtschranken, durchläuft, wobei deren Volumen dem durchgesaugten Luftvolumen entspricht.

4.  Oberflächenmeßgerät nach einem der vorhergehenden Ansprüche, gekennzeichnet durch Ansteuerung der elektronisch stabilisierten Zeitmeßeinrichtung (8) durch die beiden Schaltpunkte (5, 6).

**Claims**

1.  Surface area measuring device based on the principle of air permeability for determining the specific surface area of pulverulent substances, a predetermined air volume being supplied through a sample made from the material to be investigated, comprising a sample holder (11) for the sample, characterized in that

a) the sample holder (11) is adapted to receive a measuring sleeve (16);

b) the measuring sleeve (16) is adapted to receive a compact compacted to a defined volume/pore volume and forming the sample;

c) a vacuum pump (3) is provided which sucks a predetermined air volume through the stable compact by means of a constant measuring vacuum;

d) the measuring sleeve (16) and the sample holder (11), respectively, is directly connected to the vacuum circuit; and that

e) the sample holder (11) on the device and accessible from the outside is formed as an absolutely air-tight connection between the measuring sleeve (16), particularly deburred measuring sleeve, containing the compacted sample and the vacuum circuit connected on both sides via the sample holder (11); and

f) that a measuring arrangement is present which measures the flow time required for this air current.

2.  Surface area measuring device according to claim 1, characterized in that for distributing the partial vacuum magnetic valves (1, 2) are arranged between the sample holder (11) and a time measuring means (5, 7) disposed at the end of the measuring circuit, which are switched by corresponding control means.

3.  Surface area measuring device according to any one of the preceding claims, characterized by a liquid column (7) which is subjected to the suction action and passes through two switching points (5, 6), in particular light barriers, the volume thereof corresponding to the air volume sucked through.

4.  Surface area measuring device according to any one of the preceding claims, characterized by driving the electronically stabilized time measuring means (8) by the two switching points (5, 6).

**Revendications**

1.  Appareil de mesure de surface utilisant le principe de la perméabilité à l'air pour la détermination de la surface spécifique de substances pulvérulentes où un volume d'air déterminé est passé à travers un corps d'essai réalisé avec le matériau à examiner, avec un support d'échantillon (11) pour le corps d'essai, caractérisé en ce que
    a) le support d'échantillon (11) est formé pour la réception d'un manchon de mesure (16) ;
    b) le manchon de mesure (16) est adapté à la réception d'une ébauche formant le corps d'essai compactée à un rapport défini du volume/volume de pores ;
    c) il est prévu une pompe à vide (3) qui aspire à travers l'ébauche immobile un volume d'air déterminé, au moyen d'un vide de mesure constant ;
    d) le manchon de mesure (16) ou le support d'échantillon (11) est directement relié au circuit de mesure ; et en ce que
    e) le support d'échantillon (11) accessible de l'extérieur de l'appareil est formé comme une liaison hermétique entre le manchon de mesure (16) contenant le corps d'essai compacté, en particulier un manchon ébavuré, et le circuit sous vide raccordé de part et d'autre par l'intermédiaire du support d'échantillon (11) ; et
    f) en ce qu'il est prévu un dispositif de mesure qui mesure le temps d'écoulement requis par cet écoulement d'air.

2.  Appareil de mesure de surface selon la revendication 1, caractérisé en ce que pour la répartition de la dépression il est prévu entre le porte-échantillon (11) et un chronomètre (5, 7) se trouvant à une extrémité du circuit de mesure, des électrovannes (1, 2) associées à des dispositifs de commande correspondants.

3.  Dispositif de mesure de surface selon une des revendications précédentes, caractérisé par une colonne de liquide (7) exposée à l'action d'aspiration qui traverse deux points de commutation (5, 6), en particulier des barrières lumpineuses, son volume correspondant au volume d'air aspiré.

4.  Dispositif de mesure de surface selon une des revendications précédentes, caractérisé en ce que le dispositif (8) de mesure chronométrique électroniquement stabilisé est commandé par les deux points de commutation (5, 6).

Fig.1

Fig.2

Fig.3

Fig.4